# EUROPÄISCHE PATENTSCHRIFT

(11) **EP 2 529 053 B1**
(45) Veröffentlichungstag und Bekanntmachung des Hinweises auf die Patenterteilung: **13.11.2013**
(21) Anmeldenummer: 11819062.8
(22) Anmeldetag: 13.12.2011
(51) Int. Cl.: E02B 17/00, F03D 1/00, F03D 7/02, E01F 3/00

(54) **WINDENERGIEANLAGE MIT HUBSCHRAUBERLANDEPLATTFORM**
WIND TURBINE HAVING A HELICOPTER LANDING PAD
ÉOLIENNE ÉQUIPÉE D'UNE PLATE-FORME D'ATTERRISSAGE D'HÉLICOPTÈRE

(30) Priorität: 24.12.2010 DE 102010055873
(43) Veröffentlichungstag der Anmeldung: 05.12.2012
(73) Patentinhaber: Aerodyn Engineering GmbH, 24768 Rendsburg (DE)
(72) Erfinder: SIEGFRIEDSEN, Sönke, 24768 Rendsburg (DE)
(74) Vertreter: Lobemeier, Martin Landolf
(86) Internationale Anmeldenummer: PCT/DE2011/002112
(87) Internationale Veröffentlichungsnummer: WO 2012/083925

(56) Entgegenhaltungen:
- EP-A2- 2 343 453
- DE-C1- 10 013 442
- DE-U1- 20 205 396
- US-A1- 2007 110 578

## Beschreibung

Die Erfindung betrifft eine Windenergieanlage mit einem Turm, einer auf dem Turm drehbar angeordneten Gondel und einer auf der Gondel angeordneten Hubschrauberlandeplattform.

Neben der Errichtung von Windenergieanlagen in Offshore-Gebieten stellt auch die Wartung von Offshore-Windenergieanlagen hohe Anforderungen an die Sicherheit des die Offshore-Windenergieanlagen wartenden Personals und die Logistik zur Ausführung derartiger Unternehmungen. Die Offshore-Gebiete, in denen Windenergieanlagen nutzbringend errichtet werden können, sind zugleich Gebiete mit im Jahresdurchschnitt hohen Windgeschwindigkeiten, wechselhaften Wetterlagen und hohem Seegang und damit unter Extrembedingungen nur schlecht oder überhaupt nicht zugängliche Gebiete.

Die aus wirtschaftlichen Gründen bestehende Notwendigkeit, die Stillstandzeiten von Windenergieanlagen so kurz wie möglich zu halten, konkurriert daher im Wartungs- oder Reparaturfall einer Offshore-Windenergieanlage mit der Möglichkeit, die Offshore-Windenergieanlage überhaupt zu erreichen. Insbesondere muss aufgrund des dezentralen Standorts derartiger Windenergieanlagen hierfür auch die Zeit berücksichtigt werden, die benötigt wird, um die Offshore-Windenergieanlagen vom Festland aus zu erreichen. Darüber hinaus trifft der Reparaturfall einer Windenergieanlage auch regelmäßig mit einer Extremwetterlage zusammen, die einen Zugang zur reparaturbedürftigen Windenergieanlage nur - wenn überhaupt - innerhalb sehr kurzer Zeitfenster erlaubt.

Es wurden daher bereits mehrere Einrichtungen einer Offshore-Windenergieanlage vorgeschlagen, um Personal und Material zu einer wartungsbedürftigen Anlage sicher auf dem Luft oder dem Wasserweg oberhalb der Wasseroberfläche als aber auch unterhalb der Wasseroberfläche zu verbringen.

Obgleich die Anreise zu einer Offshore-Windenergieanlage unterhalb der Wasseroberfläche mittels eines U-Boots, wie z.B. in der DE 10 2005 055 585 A1 vorgeschlagen, weitgehend witterungsunabhängig ist, ist dieses Verfahren sehr zeitaufwändig und bedarf speziell ausgebildeter Unterwasserfahrzeuge zum Andocken an die Offshore-Windenergieanlage.

Von den beiden oberhalb der Wasseroberfläche genannten Transportarten ist wiederum der Transport von Material und/oder Personal mit einem Hubschrauber bevorzugt, da für die Hin- und Rückreise gegenüber dem Schiffsweg weniger Zeit eingeplant werden muss. Insbesondere bei rasch wechselnder Wetterlage ist der Transport auf dem Schiffsweg (zeitlich) nur schlecht kalkulierbar.

Insbesondere ist es beim Transport per Hubschrauber von Vorteil, wenn das Personal direkt auf der Gondel der Windenergieanlage abgesetzt werden kann, da das Personal nicht erst zu Wartungszwecken durch den Turm zur Gondel aufsteigen muss und die Stillstandzeit der wartungsbedürftigen Anlage kurz gehalten werden kann.

Zum Absetzen des Personals aus einem Helikopter auf einer Windenergieanlage sind beispielsweise auf der Gondel der Windenergieanlage angeordnete nach oben offene Käfigstrukturen, sogenannte Hoisting-Plattformen, bekannt, in die das Personal von einem Hubschrauber heraus mittels einer Seilwinde abgelassen werden kann. Dieser Vorgang des Absetzens von Personal aus einem über der Windenergieanlage schwebenden Helikopter erfordert jedoch erhöhte Aufmerksamkeit vom Piloten, dem die Winde bedienenden Helikopterpersonal, sowie dem am Seil der Winde eingehakten und auf der Windenergieanlage abzusetzenden Wartungspersonal, das zudem über eine besondere Ausbildung verfügen muss. Darüber hinaus ist dieser Vorgang auch unbequem und nicht ohne Risiko für alle am Vorgang Beteiligten.

Alternativ hierzu sind bereits Hubschrauberlandeplattformen vorgeschlagen worden, die sich am Turm und/oder an der Gondel der Windenergieanlage abstützen; vgl. DE 100 13 442 C1 oder DE 202 05 396 U1. Der Vorteil von an der Windenergieanlage angeordneten Hubschrauberlandeplattformen ist, dass der Pilot den Hubschrauber nicht über der Windenergieanlage halten muss und das Personal den Hubschrauber einfach und bequem verlassen kann, ohne dass für das Personal ein zusätzliches Sicherheitsrisiko durch Abseilmanöver besteht. Darüber hinaus kann auch Kraftstoff eingespart werden, da der Hubschrauber nicht zu seiner Basis zurückkehren oder im Bereich der Windenergieanlage kreisen muss, sondern für die Zeitdauer der Wartung direkt auf der Windenergieanlage geparkt warten kann. Auch im Fall eines bei Wartungsarbeiten verletzten Monteurs ist ein Abtransport viel leichter möglich.

An direkt an der Windenergieanlage angeordneten Hubschrauberlandeplattformen nachteilig ist jedoch, dass die Landeplattformen im Wesentlichen auf Höhe der Gondel dem Rotor gegenüberliegend und damit möglichst weit von der Nabe und den Rotorblättern der Windenergieanlage entfernt angeordnet werden müssen, damit es zu keiner Kollision der Rotorblätter des Hubschraubers mit den Rotorblättern der Windenergieanlage kommt. Hierfür sind Mindestabstände vorgeschrieben. Zum Einleiten der Eigenlast der Hubschrauberlandeplattform sowie der darauf angeordneten Lasten in den Turm der Windenergieanlage erfordert diese Anordnung jedoch eine groß dimensionierte Auslegung der Tragkomponenten, die wiederum das Gesamtgewicht der Windenergieanlage, deren Arbeitsaufwand bei der Herstellung der Einzelkomponenten und deren Kosten erhöht.

Aufgabe der Erfindung ist es daher, eine Windenergieanlage, insbesondere eine Offshore-Windenergieanlage, mit einer Landemöglichkeit für Helikopter zu schaffen, die einen möglichst geringen Einfluss auf die Statik der Windenergieanlage nimmt und eine möglichst einfache sowie leichte Anbindungsstruktur aufweist.

Diese Aufgabe wird durch die Windenergieanlage mit den Merkmalen von Anspruch 1 gelöst. Die Unteransprüche geben vorteilhafte Ausgestaltungen der Erfindung wieder.

Die Erfindung beruht auf einer vorteilhaften Kombination mehrerer Merkmale, die nur gemeinsam eine erfolgreiche Umsetzung des Erfindungsgedankens ermöglichen:
1. Bei der erfindungsgemäßen Windenergieanlage muss es sich um eine Windenergieanlage mit einem Zweiblattrotor handeln.
   Bei der Windenergieanlage darf es sich nur um eine Windenergieanlage mit höchstens zwei Rotorblättern handeln. Bei einer Windenergieanlage mit drei Rotorblättern besteht das erfindungsgemäß zu meidende Problem, dass die Rotorblätter der Windenergieanlage auch bei arretiertem Rotor eine Kollisionsgefahr für den Hubschrauber, speziell für dessen Rotorblätter darstellen, da immer wenigstens ein Blatt des Dreiblattrotors sich über die Oberseite der Gondel erstreckt.
2. Die Windenergieanlage muss eine Arretiervorrichtung aufweisen, mit der der Zweiblattrotor in einer Position arretiert werden kann, in der sich die Blätter des Zweiblattrotors in einer horizontalen Position erstrecken. Die Arretiervorrichtung kann beispielsweise wie aus der DE 10 2008 063 043 B4 bekannt ausgebildet sein.
   Damit die unter 1. genannte Kollisionsgefahr der Rotorblätter der Windenergieanlage mit den Rotorblättern des Helikopters ausgeräumt werden kann, muss der Zweiblattrotor der erfindungsgemäßen Windenergieanlage in einer horizontalen Position arretiert werden können, sodass sich keines der Blätter über die Oberseite der Gondel erstreckt.
   Ein die erfindungsgemäße Windenergieanlage anfliegender Hubschrauberpilot findet also eine überschaubare Anflugsituation vor, ohne dass auf über die Landeplattform sich vertikal erstreckende Strukturen geachtet werden müsste.
3. Schließlich muss der Querschnitt des oberen Turmabschnitts in Draufsicht auf die erfindungsgemäße Windenergieanlage vollständig innerhalb der Außenkontur der Hubschrauberlandeplattform liegen.
   Diese Eigenschaft der Windenergieanlage stellt sicher, dass die von der Hubschrauberlandeplattform aufgenommenen Lasten wie auch die Last der Hubschrauberlandeplattform selbst auf kürzestem Weg und im Wesentlichen senkrecht in den Turm der Windenergieanlage eingeleitet werden können. Durch diese Ausbildung wird eine hohe Stabilität der Konstruktion erreicht, die ein hohes Maß an Sicherheit für die Landung und zum Abstellen eines Hubschraubers auf der Windenergieanlage bietet. Da hierfür auch keine Ausleger erforderlich sind, kann die Konstruktion der Hubschrauberlandeplattform auch leicht und kostengünstig ausgeführt werden.
   Besonders bevorzugt ist eine Ausbildung der Erfindung, bei der die Hubschrauberlandeplattform und der Turm konzentrisch angeordnet sind bzw. der Schwerpunkt der Hubschrauberlandeplattform im Wesentlichen lotrecht über dem Mittelpunkt des Turmquerschnitts angeordnet ist.

Die Hubschrauberlandeplattform ist bekanntermaßen kreisförmig oder insbesondere als regelmäßiges Achteck ausgebildet. Sie ist bevorzugt mit einem die Hubschrauberlandeplattform umgebenden Netz zur Absturzsicherung versehen, das besonders bevorzugt zumindest im dem Rotor der Windenergieanlage zugewandten Bereich klappbar ausgebildet ist, sodass die Gesamtfläche der Hubschrauberlandeplattform bei Nichtgebrauch während des regulären Betriebs der Windenergieanlage verringert und vor dem Anflug durch einen Hubschrauber vergrößert werden kann.

Die Hubschrauberlandeplattform weist nach einem weiteren bevorzugten Ausführungsbeispiel auch einen Durchstieg in den Innenraum der Gondel der Windenergieanlage auf. Dieser Durchstieg kann beispielsweise offen oder mit einer verschließbaren Luke ausgebildet sein, wobei die Luke ein Teil der sich horizontal erstreckenden Landeplattform sein kann.

Alternativ kann der Durchstieg auch so ausgebildet sein, dass der Durchstieg nicht im Inneren der Gondel endet, sondern auf der Oberseite der Gondel oder einer neben der Gondel angeordneten Gangway, also einem Laufsteg, der zu einem Einstieg in den Innenraum der Gondel oder in den Turm führt. Als Gangway kann beispielsweise ein außerhalb der Gondel angeordnetes Kühlaggregat dienen.

Neben den allgemeinen Vorschriften zur Kennzeichnung der Hubschrauberlandeplattform mit dem Buchstaben "H", Beleuchtung der Landeplattform, Befestigungseinrichtungen zur Befestigung des Hubschraubers während des Parkens auf der Landeplattform, sind im Übrigen die allgemeinen Vorschriften im Flugverkehr, insbesondere die Vorschriften zur Genehmigung der Anlage und des Betriebs von Hubschrauberlandeplätzen zu beachten.

Im Weiteren wird die Erfindung anhand eines in den beigefügten Zeichnungen dargestellten, besonders bevorzugt ausgestalteten Ausführungsbeispiels näher erläutert. Es zeigen:
- Fig. 1: eine Seitenansicht der Windenergieanlage nach der Erfindung von seitlich des Kopfträgers;
- Fig. 2: eine Seitenansicht der Windenergieanlage aus Fig. 1 von hinten;
- Fig. 3: eine Draufsicht auf die Windenergieanlage aus Fig. 1;
- Fig. 4: eine perspektivische Ansicht der erfindungsgemäßen Windenergieanlage beim Landeanflug eines Hubschraubers auf die Windenergieanlage; und
- Fig. 5: eine perspektivische Ansicht der Windenergieanlage aus Fig. 4 mit auf der Hubschrauberlandeplattform gelandetem Hubschrauber.

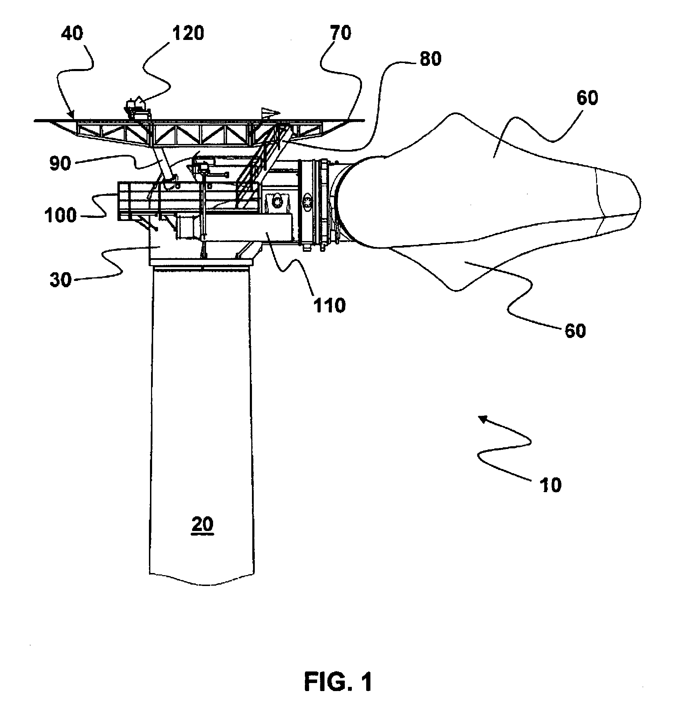

Fig. 1 zeigt ein besonders bevorzugt ausgestaltetes Ausführungsbeispiel einer Windenergieanlage nach der Erfindung in einer Seitenansicht. Die Windenergieanlage 10 ist als SCD-Anlage ausgebildet und weist einen Turm 20, einen Kopfträger 30 (also eine als Last übertragendes Element ausgebildete Gondel) und einen Zwei-Blatt-Rotor mit linear an einer Rotornabe angeordneten Blättern 6 auf. Die Verwendung eines Kopfträgers 30 hat gegenüber den regelmäßig verwendeten Gondeln, die lediglich eine Verkleidung aus Kunststoff aufweisen, den Vorteil, dass dem Turm ein gegossenes Stahlgussteil aufsitzt, das eine sehr kraftschlüssige Verbindung zum Turm 20 verwirklicht und so die Lasten der Hubschrauberlandeplattform 40 direkt senkrecht über den Kopfträger 30 in den Turm 20 eingeleitet werden können.

Oberhalb des Kopfträgers 40 ist eine Hubschrauberlandeplattform 40 angeordnet, die mittels der Stützen 90 am Kopfträger 40 befestigt ist. Die Hubschrauberlandeplattform 40 weist einen Durchstieg 70 auf, der mit einer Treppe ausgestattet sein kann, damit das Personal von der Hubschrauberlandeplattform 40 sicher in den Kopfträger 30 oder den Turm 20 zu gelangen. Zur Sicherheit des auf der Hubschrauberlandeplattform 40 gelandeten Personals ist an der Hubschraubelandeplattform 40 auch eine aus einem Netz gebildete Absturzsicherung 70 vorgesehen, die zumindest in dem Bereich der Hubschraublandeplattform 40, der dem Rotor zugewendet ist, ein- und ausklappbar ausgebildet ist. Insbesondere wird die Absturzsicherung 70 bei Betrieb der Windenergieanlage eingeklappt sein, um eine Kollision der Rotorblätter 60 mit der Hubschraublandeplattform 40 zu vermeiden. Speziell wird eine Steuerung die Absturzsicherung 70 im dem Rotor zugewandten Bereich nur dann ausklappen, wenn der Rotor arretiert ist.

Es ist deutlich in Fig. 1 zu erkennen, dass die Hubschraublandeplattform 40 und der Turm 20 der Windenergieanlage 10 konzentrisch angeordnet sind, wobei der Schwerpunkt der Hubschrauberlandeplattform 40 im Wesentlichen lotrecht über dem Mittelpunkt des Turmquerschnitts angeordnet ist.

Unterhalb der Hubschraublandeplattform 40 ist der Durchstieg 70 und die darunter angeordnete Gangway 100 mit einem Geländer gesichert. Unterhalb der Gangway 100 können weitere Elemente, z.B. Kühlaggregate 110, angeordnet sein, die auch bevorzugt einen Teil der Gangway 100 bilden.

Schließlich weist die in Fig. 1 dargestellte Hubschraublandeplattform 40 Mittel zur Befeuerung 120 sowie Sensoren zum Messen der Windgeschwindigkeit, Temperatur etc. auf.

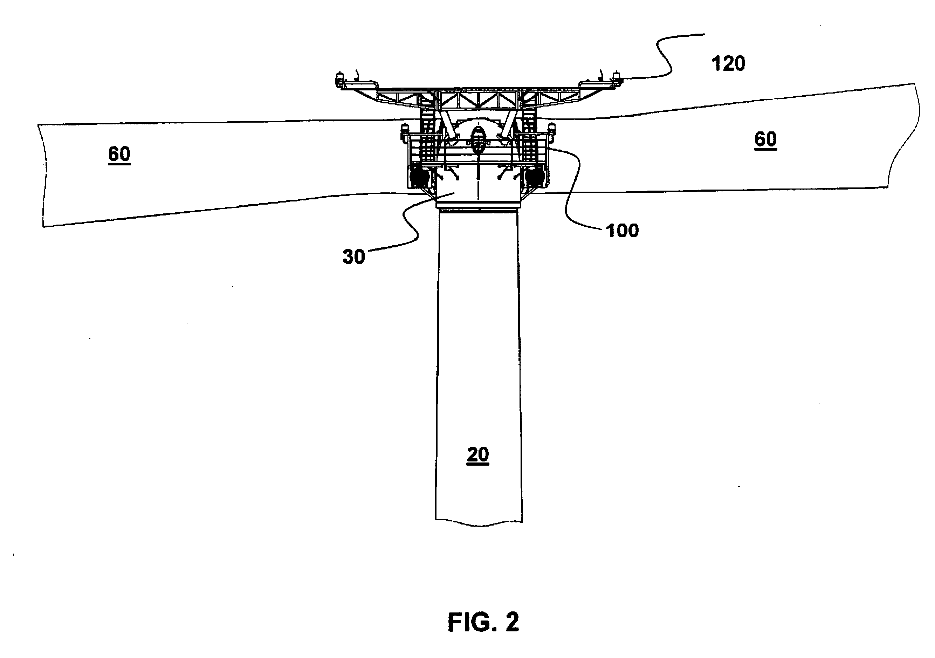

In Fig. 2 ist zu erkennen, dass diese Mittel 120 auf Auslegern angeordnet sind, zwischen denen die Absturzsicherung gespannt ist. Zum Ein- und Ausklappen der Absturzsicherung 70 ist es daher bevorzugt, wenn die Ausleger ein- und ausklappbar oder ein- und ausfahrbar ausgebildet sind. Aus Sicherheitsgründen ist die Gangway 100 so ausgebildet, dass diese beide Seiten des Kopfträgers 30 auf der dem Rotor gegenüberliegenden Seite miteinander verbindet, wobei auch der Einstieg in den Kopfträger 30 von der dem Rotor abgewandten Seite erfolgen kann.

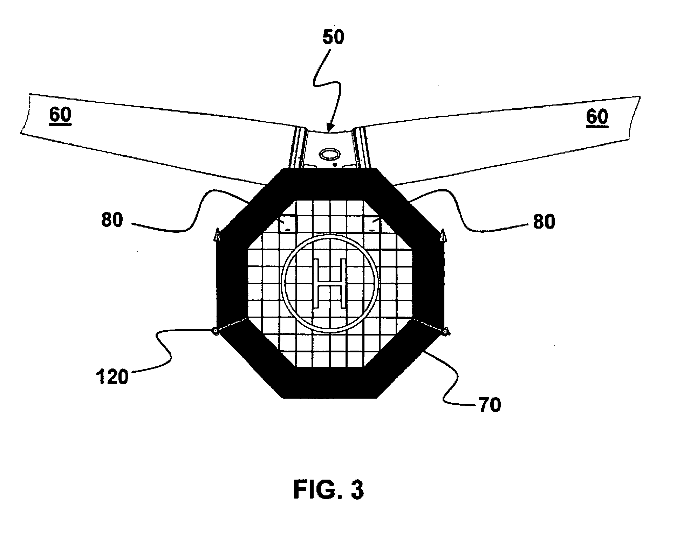

Fig. 3 zeigt die bevorzugt ausgestaltete Windenergieanlage 10 von oben, sodass der Turmquerschnitt von der Hubschrauberlandeplattform 40 verdeckt ist. Insbesondere liegt der Querschnitt des oberen Turmabschnitts dabei vollständig innerhalb der Außenkontur der Hubschrauberlandeplattform 40, speziell innerhalb der Außenkontur des tragenden Teils Hubschrauberlandeplattform 40, also ohne Absturzsicherung 70.

Neben der klappbar ausgebildeten Absturzsicherung 70 sind die Durchstiege 80 zu der Gangway auf beiden Seiten des Kopfträgers 30 zu erkennen. Die Durchstiege 80 können offen oder mit einer in der Hubschrauberlandeplattform 40 angeordneten Klappe verdeckt und entsprechend als Durchstieg 80 markiert sein.

Darüber hinaus ist auch zu erkennen, dass eine klappbare oder ein- und ausfahrbare Absturzsicherung 70 im gezeigten Beispiel zwingend erforderlich ist, da die Absturzsicherung 70 in ihrem ausgeklappten bzw. ausgefahrenem Zustand in die Blattebene des Rotors 50 hineinragt. Wird die Absturzsicherung 70 eingeklappt oder eingefahren kann der Rotor 50 freigegeben werden.

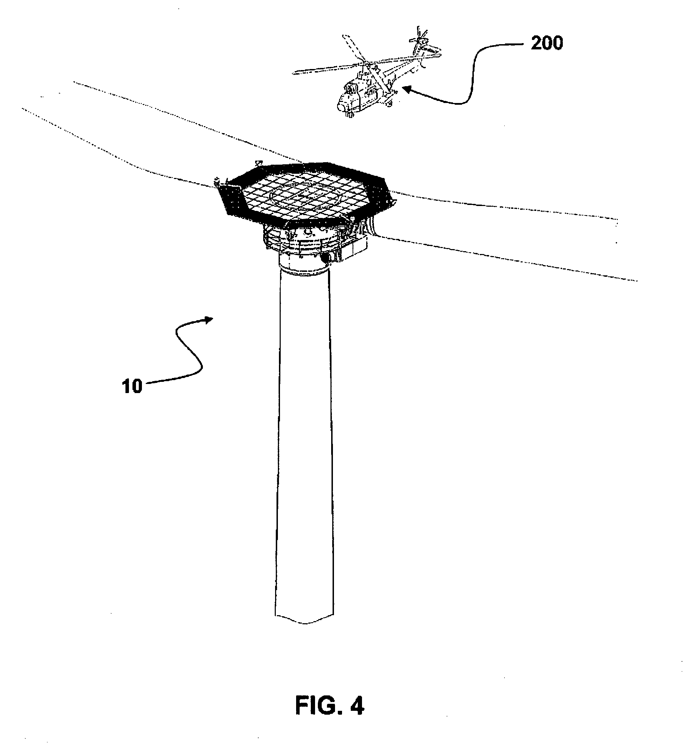

Fig. 4 zeigt einen Hubschrauber 200 im Landeanflug auf eine erfindungsgemäß ausgestaltete Windenergieanlage 10. Der Anflug auf die Windenergieanlage 10 mit dem Hubschrauber 200 erfolgt gegen die Windrichtung, sodass der Pilot des Hubschraubers bereits bei abgeschalteter Windenergieanlage 10 durch die Ausrichtung des Kopfträgers 30 mit dem Wind einen optischen Anhaltspunkt erhält, wie die Windenergieanlage 10 anzufliegen ist. Dabei kann die Abschaltung der Anlage zuvor durch eine zentrale Schaltstelle oder per Funk aus dem Hubschrauber 200 heraus eingeleitet worden sein.

Insbesondere wird bei Abschaltung der Anlage der Rotor 50 in eine Parkposition gefahren, in der die Blätter 60 horizontal ausgerichtet sind. Der Rotor 50 wird darauf durch die Arretiereinrichtung in der horizontalen Parkposition arretiert und die Absturzsicherung 70 ausgeklappt bzw. ausgefahren. Erst dann kann durch eine entsprechende Rückmeldung durch die Schaltzentrale oder an der Fernbedienung oder durch einsetzende Befeuerung der Hubschrauberlandeplattform 40 signalisiert werden, dass der Hubschrauber 200 auf der Hubschrauberlandeplattform 40 landen kann.

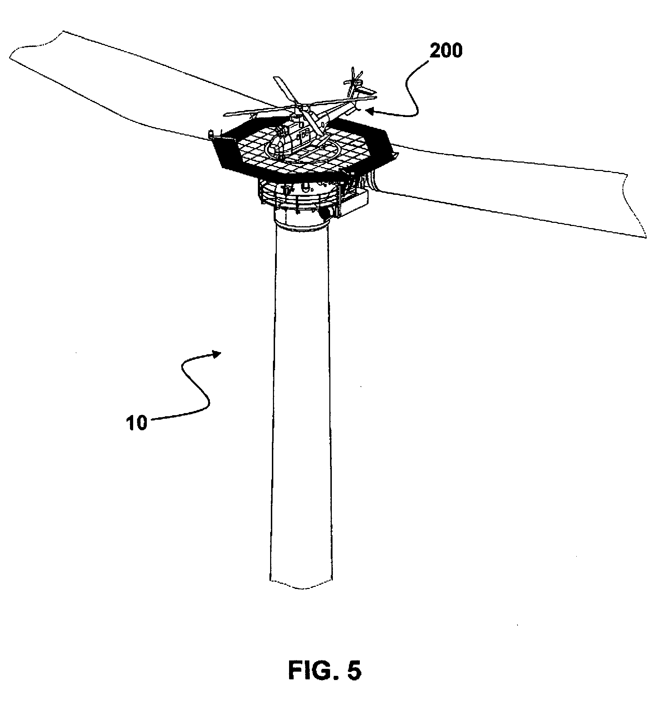

Fig. 5 zeigt eine perspektivische Ansicht des auf der Hubschrauberlandeplattform 40 gelandeten Hubschraubers 200. Es versteht sich, dass die Hubschrauberlandeplattform 40 weitere Mittel zur Befestigung des Hubschraubers 200 aufweisen muss, um ein sicheres Abstellen des Hubschraubers 200 auf der Windenergieanlage 10 gewährleisten zu können.

## Patentansprüche

1. Windenergieanlage (10) mit einem Turm (20), einer auf dem Turm (20) drehbar angeordneten Gondel (30) und einer auf der Gondel (30) angeordneten Hubschrauberlandeplattform (40),
**dadurch gekennzeichnet, dass**
die Windenergieanlage (10)
- einen Rotor (50) mit höchstens zwei Rotorblättern (60) und
- eine Arretiervorrichtung zur Arretierung des Rotors (50) in einer Position mit sich horizontal erstreckenden Rotorblättern (60) aufweist, und
die Hubschrauberlandeplattform (40) derart auf der Gondel (30) angeordnet ist, dass der Querschnitt des oberen Turmabschnitts in Draufsicht vollständig innerhalb der Außenkontur der Hubschrauberlandeplattform (40) liegt.

2. Windenergieanlage (10) nach Anspruch 1, **dadurch gekennzeichnet, dass** der Schwerpunkt der Hubschrauberlandeplattform (40) im Wesentlichen lotrecht über dem Mittelpunkt des Turmquerschnitts angeordnet ist.

3. Windenergieanlage (10) nach einem der vorhergehenden Ansprüche, **dadurch gekennzeichnet, dass** die Hubschrauberlandeplattform (40) und der Turm (20) konzentrisch angeordnet sind.

4. Windenergieanlage (10) nach einem der vorhergehenden Ansprüche, **dadurch gekennzeichnet, dass** die Hubschrauberlandeplattform (40) von einem wenigstens in einem Teilbereich verschwenkbaren Netz (70) zur Absturzsicherung umgeben ist.

5. Windenergieanlage (10) nach einem der vorhergehenden Ansprüche, **dadurch gekennzeichnet, dass** die Hubschrauberlandeplattform (40) einen Durchstieg (80) zur Gondel (30) oder in den Turm (20) aufweist.

6. Windenergieanlage (10) nach einem der vorhergehenden Ansprüche, dadurch dass die Lasteinleitungspunkte der Hubschrauberlandeplattform (40) auf der als Kopfträger ausgebildeten Gondel (30) der Windenergieanlage (10) vorgesehen sind.

## Claims

1. A wind turbine (10), comprising a tower (20), a nacelle (30) rotatably arranged on the tower (20), and a helicopter landing pad (40) arranged on the nacelle (30),
**characterized in that**
the wind turbine (10) has
- a rotor (50) having at most two rotor blades (60) and
- a locking device for locking the rotor (50) in a position in which the rotor blades (60) extend horizontally, and
that the helicopter landing pad (40) is arranged on the nacelle (30) in such a way that the cross-section of the upper tower section lies completely within the outer contour of the helicopter landing pad (40) in the top view.

2. The wind turbine (10) according to Claim 1, **characterized in that** the centre of gravity of the helicopter landing pad (40) is arranged essentially vertically above the centre of the tower cross-section.

3. The wind turbine (10) according to one of the preceding claims, **characterized in that** the helicopter landing pad (40) and the tower (20) are arranged concentrically

4. The wind turbine (10) according to one of the preceding claims, **characterized in that** the helicopter landing pad (40) is surrounded by at least one mesh (70), for arresting falls, that can be pivoted at least in a part area.

5. The wind turbine (10) according to one of the preceding claims, **characterized in that** the helicopter landing pad (40) exhibits a passage (80) to the nacelle (30) or into the tower (20).

6. The wind turbine (10) according to one of the preceding claims, **characterized in that** the load-introducing points of the helicopter landing pad (40) are provided on the nacelle (30) designed as a head carrier, of the wind turbine (10).

## Revendications

1. Éolienne (10) dotée d'une tour (20), d'une gondole pivotante (30) installée sur la tour (20), et d'une plateforme d'atterrissage (40) pour hélicoptère installée sur la gondole,
**caractérisée en ce que**
l'éolienne possède (10)
- un rotor (50) doté de maximum deux palles (60) et
- un dispositif de blocage servant à bloquer le rotor (50) dans une position avec les palles s'étendant à l'horizontale (60)
et
la plateforme d'atterrissage pour hélicoptère (40) installée sur la gondole (30) de sorte que la coupe transversale de la partie supérieure de la tour, vue de haut, se trouve entièrement dans le contour extérieur de la plateforme d'atterrissage pour hélicoptères (40).

2. Éolienne (10) selon la revendication 1, **caractérisée en ce que** le centre de gravité de la plateforme d'atterrissage pour hélicoptère (40) est principalement vertical, à partir du centre de la coupe transversale de la tour.

3. Éolienne (10) selon une des revendications susmentionnées, **caractérisée en ce que** la plateforme d'atterrissage pour hélicoptère (40) et la tour (20) soient disposées de manière concentrique.

4. Éolienne (10) selon une des revendications susmentionnées, **caractérisée en ce que** la plateforme d'atterrissage pour hélicoptère (40) soit entourée d'un filet (70) au moins partiel (70) permettant de sécuriser les chutes.

5. Éolienne (10) selon une des revendications susmentionnées, **caractérisée en ce que** la plateforme d'atterrissage pour hélicoptère (40) est dotée d'un passage (80) donnant sur la gondole (30) ou dans la tour (20).

6. Éolienne (10) selon une des revendications susmentionnées, **caractérisée en ce que** les points de réglage de la charge de la plateforme d'atterrissage pour hélicoptère (40) soient prévus sur la gondole (10) en forme de support de tête de l'éolienne (10).
